Europäisches Patentamt

European Patent Office

Office européen des brevets

(19)

(11) **EP 0 610 988 B1**

(12) **FASCICULE DE BREVET EUROPEEN**

(45) Date de publication et mention
de la délivrance du brevet:
**26.09.2001 Bulletin 2001/39**

(51) Int Cl.⁷: **H04B 7/26**, H04L 5/06

(21) Numéro de dépôt: **94200210.6**

(22) Date de dépôt: **28.01.1994**

(54) **Système de communication par étalement de spectre à multiutilisateurs**

Mehrbenutze Spreizspektrum-Kommunikationsanordnung

Multi-user spread spectrum communication system

(84) Etats contractants désignés:
**DE FR GB IT**

(30) Priorité: **03.02.1993 FR 9301182**

(43) Date de publication de la demande:
**17.08.1994 Bulletin 1994/33**

(73) Titulaire: **Koninklijke Philips Electronics N.V.
5621 BA Eindhoven (NL)**

(72) Inventeurs:
• **Chouly, Antoine
F-75008 Paris (FR)**
• **Brajal, Américo
F-75008 Paris (FR)**
• **Jourdan, Sabine
F-75008 Paris (FR)**

(74) Mandataire: **Landousy, Christian et al
Société Civile S.P.I.D.
156, Boulevard Haussmann
75008 Paris (FR)**

(56) Documents cités:
**EP-A- 0 446 024         EP-A- 0 448 492
WO-A-92/05646         US-A- 5 132 985**

• **TREIZIEME COLLOQUE GRETSI Septembre
1991 , JUAN-LES-PINS,FR; pages 413 - 416
XP242802 B.LE FLOCH ET AL 'Demodulation
coherente du systeme de transmission
multiporteuses COFDM dans un canal de radio
mobile'**

**Description**

L'invention concerne un système de communication à multiutilisateurs comprenant au moins une station de base émettrice/réceptrice et une pluralité de stations utilisatrices émettrices/réceptrices communiquant entre elles à travers des canaux de transmission au moyen de la station de base, le système comprenant :

- des moyens pour transformer, à l'émission, des messages à émettre en symboles d'une constellation et des moyens pour effectuer des opérations inverses, à la réception, dans chaque station utilisatrice,
- des moyens pour coder, à l'émission, lesdits symboles par un codage par étalement de spectre et des moyens de décodage pour effectuer des opérations inverses à la réception,
- des moyens pour émettre/recevoir des données codées sur un canal.

Elle concerne également une station utilisatrice émettrice/réceptrice notamment soit une station mobile assurant des communications par voie hertzienne, soit une station fixe communiquant par câbles, satellites ou autres. Elle concerne également une station de base destinée à recevoir et à réémettre des messages en vue de mettre en communication des stations mobiles entre elles.

Un système de communication entre utilisateurs doit satisfaire à plusieurs critères et parmi ceux-ci celui de confidentialité est aisément ressenti. Les concepteurs de tels systèmes se sont donc orientés vers l'utilisation de codages pour la transmission des messages à transmettre. Un système de codage performant est le système à accès multiple à division de code appelé CDMA en langue anglaise (Code Division Multiple Access). Ce système présente les avantages de confidentialité, de robustesse au brouillage, de robustesse contre des interférences ou des dégradations, et est, par ailleurs, facilement dimensionnable à un nombre quelconque d'utilisateurs. Le principe du système CDMA consiste à faire un étalement du spectre fréquentiel. Pour cela, un message à coder formé de bits de durée élementaire $T_s$ est multiplié avant l'émission par une séquence pseudo-aléatoire de bits ayant une durée élementaire $T_c$ telle que $T_c = T_s/L$. Le paramètre L est la période de la séquence, c'est-à-dire le nombre de bits de la séquence. A chaque utilisateur est ainsi associée une séquence qui lui est propre. Une station de base reçoit les messages codés en provenance de tous les utilisateurs, les décode puis les recode et les réémet vers tous les utilisateurs. Elle gère les communications, c'est-à-dire qu'elle permet à un utilisateur destinataire, et à lui seul, de décoder un message qui lui est destiné. Un tel système nécessite d'utiliser à la réception un égaliseur qui peut devenir complexe lorsque le nombre d'utilisateurs croît. En effet, en présence d'échos d'un environnement à multitrajets, les échos se rapportant au canal d'un utilisateur ne seront généralement pas les mêmes que les échos du canal se rapportant à un autre utilisateur. Les performances réelles d'un tel système sont donc limitées. D'autre part, il est nécessaire de bien synchroniser le récepteur sur le début de chaque séquence pour que le message reçu puisse être décodé, ce qui constitue souvent une difficulté.

Un tel système est par exemple décrit dans le livre de J.G. PROAKIS, "Digital Communications" chapitre 8, pages 800-817, publié par Mc GRAW-HILL Book Company (1989), New-York.

Un but de l'invention est donc d'accroître la fiabilité et la capacité des transmissions dans les communications entre utilisateurs.

Un but supplémentaire est de conserver au système une complexité réduite en complément des performances accrues.

Ces buts sont atteints avec un système de communication décrit dans le préambule dans lequel les moyens pour émettre/recevoir comprennent des moyens de modulation et des moyens de démodulation à multiporteuses par répartition multiplexée de fréquences orthogonales.

Ainsi avantageusment, il n'est plus nécessaire d'utiliser d'égaliseur à la réception pour égaliser les signaux ayant subi des échos dus à un environnement à multitrajets. En effet, en organisant le signal modulé sous forme de trames successives constituées de blocs munis d'intervalles de garde, il est possible d'absorber tous les retards dus à des trajets multiples. Il n'y a plus également de problèmes de synchronisation sur le début de chaque séquence de codage car tous les mécanismes de synchronisation sont déduits de ceux mis en oeuvre dans la répartition multiplexée de fréquences orthogonales. Le choix et le nombre des séquences de codage est beaucoup plus étendu. L'énergie transmise est beaucoup mieux répartie en fréquence sur le canal ce qui rend ce système plus robuste aux évanouissements sélectifs. De plus, les lobes secondaires ont moins d'énergie ce qui rend le système moins sensible aux interférences dues aux canaux adjacents. La combinaison de la technique à étalement de spectre avec la technique à multiporteuses par répartition multiplexée de fréquences orthogonales (OFDM) apporte ainsi des performances et des avantages nouveaux.

Un système selon l'invention est constitué de stations utilisatrices émettrices/réceptrices qui peuvent être mobiles, et d'au moins d'une station de base qui est fixe. Une station de base couvre ce que l'on appelle une cellule, c'est-à-dire qu'elle dispose d'un certain rayon d'action. Au-delà de ce rayon d'action, c'est une autre station de base qui prend le relai lorsque la station mobile a quitté les limites de la cellule. Avantageusement, grâce à l'invention, une cellule peut avoir une taille plus grande, alors qu'auparavant l'accroissement de taille nécessitait une complexité accrue de l'égaliseur.

Chaque station utilisatrice dispose de moyens pour émettre vers la station de base et pour décoder uniquement les messages qui lui sont destinés.

La station de base dispose de moyens pour émettre vers toutes les stations utilisatrices et pour recevoir des messages issus de toutes les stations utilisatrices et de moyens pour gérer la mise en communication des stations utilisatrices entre elles.

Dans une station utilisatrice ou une station de base, les moyens pour moduler comprennent :

- des moyens d'entrée de transformation serie-parallèle des symboles codés à émettre,
- des moyens d'application d'une transformée de Fourier inverse simultanément sur les symboles à émettre par la pluralité de porteuses,
- des moyens pour ajouter des symboles de protection contre des échos,
- des moyens de transformation parallèle-série,
- des moyens pour former des trames de blocs de symboles et ajouter des blocs de symboles spéciaux.

Les symboles spéciaux peuvent être des symboles de synchronisation, de service, d'estimation du canal ou autres.

De même, les moyens pour démoduler comprennent :

- un échantillonneur,
- des moyens d'entrée de transformation série parallèle, des données modulées reçues,
- des moyens d'application d'une transformée de Fourier directe pour délivrer lesdits symboles codés reçus,
- des moyens de transformation parallèle série.

Les moyens d'application d'une transformée de Fourier inverse peuvent être précédés de moyens d'entrelacement temporel/fréquentiel des symboles. Dans ce cas, les moyens d'application d'une transformée de Fourier directe sont suivis de moyens de désentrelacement temporel/fréquentiel des symboles.

A la réception pour tenir compte des affaiblissements du signal, on peut adjoindre un ou plusieurs module(s) de contrôle automatique de gain. Ils peuvent être disposés soit après le/les corrélateurs qui applique(nt) à la réception la/les séquence(s) pseudo-aléatoire(s) utilisée(s) au codage à l'émission soit sur chaque message codé affecté à chaque porteuse en sortie des moyens d'application de la transformée de Fourier directe.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : un schéma d'une chaîne de traitement émission/réception opérant dans une station utilisatrice.

Figure 2 : un schéma général d'une partie d'un système de communication selon l'invention.

Figure 3 : un schéma (A) du principe connu de codage par étalement de spectre et un schéma (B) du décodage associé opérant dans une station utilisatrice.

Figure 4 : deux schémas de codage (A) et de décodage (B) du même principe connu appliqué au cas de la station de base.

Figure 5 : un schéma d'un multiplexeur OFDM destiné à être utilisé avec une émission sur multiporteuses.

Figure 6 : un schéma d'un démultiplexeur OFDM.

Figure 7 : deux schémas avec entrelacement des symboles à l'émission et désentrelacement des symboles à la réception.

Figure 8 : un schéma d'un démultiplexeur d'une station utilisatrice avec contrôle automatique de gain.

Figure 9 : un schéma d'un décodeur d'une station de base avec contrôle automatique de gain.

Figure 10 : un schéma général d'un système de communication à multiutilisateurs.

Figure 11 : un diagramme de répartition des symboles sur une période de temps $\mu Ts$.

Figure 12 : deux courbes de la réponse fréquentielle d'un système classique à étalement de spectre et d'un système selon l'invention.

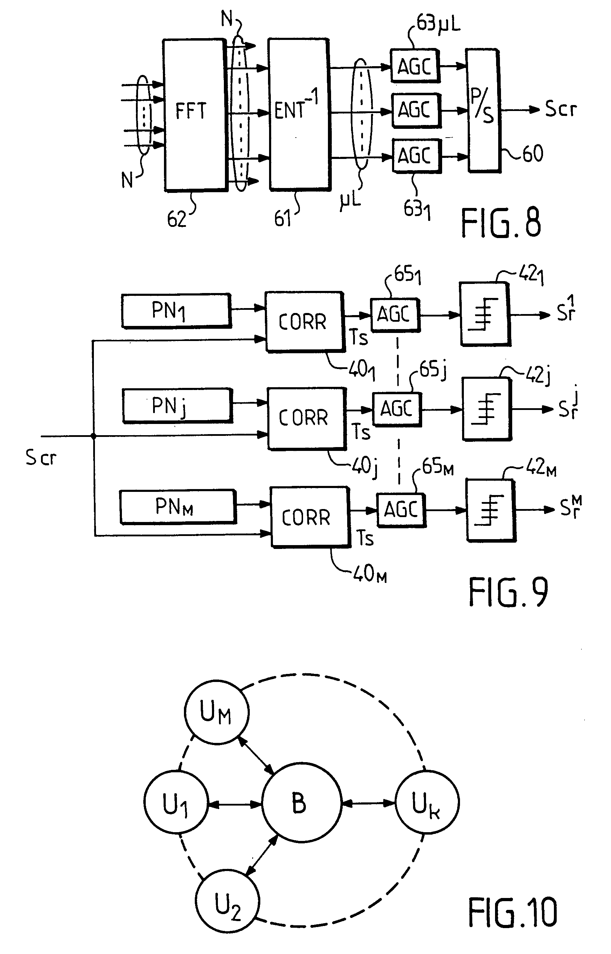

La figure 10 représente symboliquement un système de communication à multiutilisateurs ($U_1$, $U_2$... $U_k$... $U_M$) où M est le nombre total d'utilisateurs. Tous les utilisateurs communiquent par des liaisons bidirectionnelles avec une station de base B. Celle-ci sert de relai pour mettre en communication deux stations utilisatrices entre elles. Une station de base dispose d'un rayon d'action. Les stations utilisatrices étant des stations a priori mobiles, une station utilisatrice $U_2$ (ou plusieurs) peut sortir du rayon d'action d'une station de base $B_1$. Dans ce cas, une autre station de base $B_2$ participe à la gestion des communications. Les deux stations de base $B_1$, $B_2$ échangent alors des informations de gestion pour mettre en communication une station utilisatrice $U_1$ (de la zone d'action de $B_1$) avec une station utilisatrice $U_2$ (de la zone d'action de $B_2$).

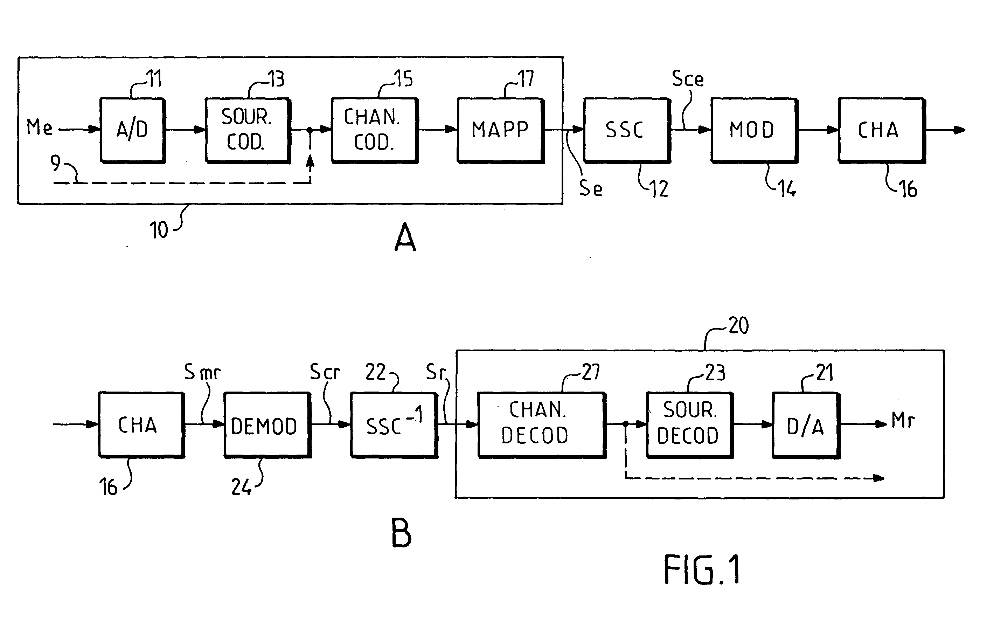

Une chaîne de traitement classique mise en oeuvre dans une station utilisatrice quelconque est représentée sur la figure 1. A l'émission (figure 1-A), elle comprend en série :

- des moyens 10 pour coder des messages Me à émettre et pour les transformer en symboles Se d'une constellation,
- des moyens 12 de codage par étalement de spectre SSC pour coder les symboles Se à émettre,
- et des moyens de modulation 14 qui modulent une porteuse par les données numériques, en bande de base, représentant les symboles. L'émission est ensuite effectuée sur le canal CHA 16.

Les moyens 10 pour coder le message Me comprennent en série :

- des moyens 11 de conversion analogique-numérique A/D, qui peuvent être suivis d'un codeur de source 13 SOUR COD,
- un codeur de canal 15 CHAN COD,
- et un organe 17 d'affection MAPP des données binaires dans une constellation.

Il peut s'agir de constellations MAQ, QPSK, BPSK ou autres. Les codeurs de source 13 et de canal 15 peuvent ne pas exister selon les caractéristiques du canal de communication. De même le convertisseur A/D 11 et le codeur de source 13 peuvent ne pas exister si le message Me est disponible sous une forme numérisée (connexion 9). Par contre, le convertisseur existe, par exemple, dans le cas des messages vocaux pour des communications téléphoniques à partir de stations utilisatrices mobiles.

Une station utilisatrice est également munie de moyens pour recevoir des données en provenance d'autres stations utilisatrices via la station de base. Pour cela, elle comprend également :

- des moyens 24 de démodulation pour extraire les données numériques, en bande de base, représentant les symboles codés reçus Scr,
- des moyens 22 de décodage $SSC^{-1}$ pour décoder des symboles reçus Sr, lesdits moyens 22 effectuant des opérations inverses de celles effectuées par les moyens 12,
- des moyens 20 pour décoder des messages reçus Mr à partir des symboles reçus Sr en effectuant des opérations inverses de celles effectuées à l'émission par les moyens 10.

Les moyens 20 comprennent en série des moyens 27 de décodage de canal, CHAN DECOD des moyens 23 de décodage de source SOUR DECOD et des moyens 21 de conversion numérique-analogique D/A. Ces moyens existent dans la mesure où les codages inverses ont été préalablement effectués à l'émission.

L'invention concerne principalement les moyens 14 de modulation à l'émission de données numériques représentant des symboles Se et les moyens 24 de démodulation pour extraire des symboles reçus Sr, les moyens 24 effectuant à la réception des opérations inverses de celles effectuées à l'émission.

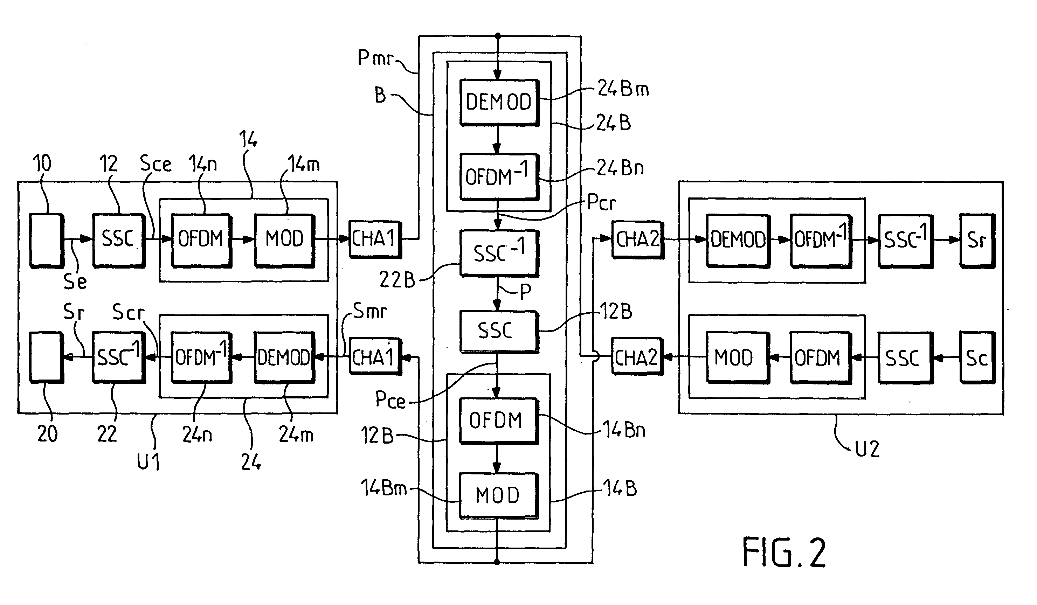

La figure 2 représente un schéma d'un système de communication selon l'invention comprenant une station de base B et des stations utilisatrices par exemple deux stations $U_1$ et $U_2$. Les stations utilisatrices ayant les mêmes moyens d'émission/réception, seule

la station $U_1$ sera détaillée par la suite étant entendu qu'une station émettrice communique avec une autre station opérant alors en station réceptrice.

Selon l'invention, on combine un codage par étalement de spectre SSC avec une modulation à multiporteuses par répartition multiplexée de fréquences orthogonales OFDM. A la réception, on effectue dans l'ordre inverse des opérations inverses.

La station $U_1$ comprend les moyens 10 de codage qui délivrent des symboles Se. Ceux-ci sont ensuite codés dans le dispositif 12 SCC de codage par étalement de spectre suivi d'un multiplexeur OFDM 14n et d'un modulateur 14m à multiporteuses, les données numériques étant émises comme cela a été décrit auparavant.

Ces données, qui peuvent être altérées par le canal de transmission CHA1, arrivent à la station de base B selon des données Pmr. Elles sont démodulées dans un démodulateur 24Bm puis démultiplexées par des moyens de démultiplexage $0FDM^{-1}$ 24Bn pour fournir des symboles codés reçus Pcr, puis un décodage $SSC^{-1}$ 22B inverse de celui effectué à l'émission fournit des symboles non codés P. Ceux-ci sont à leur tour recodés dans la station de base, par des moyens de codage SSC 12B puis multiplexés par un multiplexeur OFDM 14Bn, enfin réémis par un modulateur 14Bm à multiporteuses. Les symboles émis arrivent par un canal CHA2, qui peut être différent du précédent, à une autre station utilisatrice $U_2$ qui agit en station réceptrice. Considérons le cas où la station $U_1$ opère en station réceptrice d'une autre station émettrice. Elle reçoit des symboles modulés Smr qui sont démodulés par le démodulateur 24m puis démultiplexées par un démultiplexeur $OFDM^{-1}$ 24n qui fournit des symboles codés reçus Scr qui sont ensuite décodés par des moyens de décodage $SSC^{-1}$ 22 effectuant un décodage inverse du codage SSC effectué à l'émission.

La station de base B reçoit toutes les données en provenance de toutes les stations utilisatrices. Ces données arrivent superposées les unes aux autres dans la même bande de fréquences à l'entrée de la station de base. Celle-ci effectue la gestion des communications. Pour cela lorsqu'une station $U_1$ doit être mise en communication avec une station $U_2$, la station de base B recode le message à transmettre soit avec la séquence de la station utilisatrice à laquelle ce message est destiné, soit avec la même séquence que celle de la station émettrice et la station de base communique à la station réceptrice la séquence propre à la station émettrice pour qu'elle puisse décoder les messages qui lui parviennent par le canal.

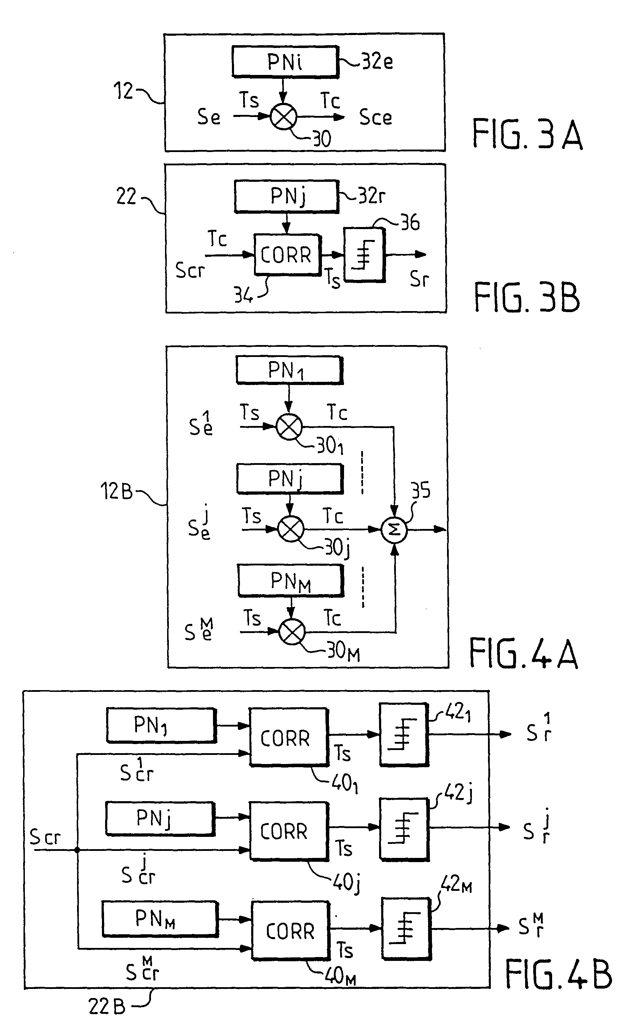

Les figures 3 et 4 décrivent la technique connue de codage/décodage par étalement de spectre utilisée par l'invention.

La figure 3 représente un schéma (A) du principe du codage par étalement de spectre SSC mis en oeuvre pour des messages en provenance d'une seule source. Pour cela un symbole numérique Se de la constellation, en bande de base, de durée Ts est, à l'émission, multiplié dans un multiplieur 30 par une séquence pseudo-aléatoire PNi issue d'un générateur 32e de séquences périodiques. La séquence peut être invariable pour chaque station utilisatrice. Dans ce cas, le générateur de séquences peut être une mémoire qui stocke à demeure la séquence PNi. La séquence PNi est formée d'une suite de bits, de durée binaire Tc avec Ts = L.Tc. Le paramètre L constitue la période de la séquence. A chaque symbole Se correspond L symboles codés Sce en sortie du multiplieur 30. Ceci se traduit dans le domaine fréquentiel par une bande plus large donc un étalement de spectre. Dans les techniques classiques, le symbole codé Sce est ensuite émis comme indiqué sur la figure 1. A la réception, toujours en bande de base, le symbole codé reçu Scr est introduit (figure 3-B) dans un corrélateur 34 qui reçoit d'un générateur 32r soit une séquence pseudo-aléatoire PNi identique à celle utilisée par la station émettrice qui envoie le symbole, soit sa propre séquence PNj si la station de base a recodé ainsi les symboles. La sortie du corrélateur entre généralement dans un organe de décision 36 qui délivre le symbole non codé reçu Sr qui est une estimation du symbole émis Se. Si le décodage n'est pas un décodage à décision, l'organe de décision 36 n'existe pas. L'estimation est alors effectuée dans des étages de traitement suivants.

La figure 3 représente les mécanismes mis en jeu dans n'importe quelle station utilisatrice. La figure 4 représente les mécanismes mis en jeu dans une station de base qui communique avec ces stations utilisatrices.

Une station de base comprend également une partie émettrice et une partie réceptrice. Des organes de la partie émettrice sont représentés schématiquement sur la figure 4-A. Plusieurs symboles numériques $S_e^1...S_e^j...S_e^M$ sont à émettre. Chacun de ces symboles est multiplié respectivement dans les multiplieurs $30_1$... $30_j$... $30_M$ par respectivement les séquences pseudo-aléatoires $PN_1$... $PN_j$... $PN_M$ propres à chaque station utilisatrice. Toutes les sorties sont regroupées dans un sommateur 35 pour être émises par le modulateur sur le canal (figure 1). La partie réceptrice est représentée schématiquement sur la figure 4-B. Tous les messages arrivent à la station de base combinés selon une suite de symboles à décoder Scr. Ces derniers entrent dans une batterie de corrélateur $40_1$... $40_j$... $40_M$ qui reçoivent respectivement les séquences pseudo-aléatoires $PN_1$... $PN_j$... $PN_M$ identiques à celles utilisées à l'émission. Comme précédemment, les sorties des corrélateurs entrent généralement dans des organes de décision respectifs $42_1$... $42_j$... $42_M$ qui délivrent chacun une estimation $S_r^1$... $S_r^j$... $S_r^M$ des symboles émis. La station de base peut opérer de deux manières distinctes : lorsqu'elle reçoit un signal codé par une séquence $PN_i$ destiné à une station utilisatrice utilisant une séquence $PN_j$, la station de base peut soit recoder le message reçu à l'aide de la séquence $PN_j$ utilisée par la station réceptrice du message, soit recoder le message reçu à l'aide

de la séquence $PN_i$ et transmettre à la station réceptrice quelle séquence est à utiliser pour le décodage.

Les figures 3 et 4 décrivent la technique connue de codage par étalement de spectre. Selon l'invention à l'émission, on fait suivre ce codage par une étape supplémentaire de modulation à multiporteuses par répartition multiplexée de fréquences orthogonales et à la réception, on introduit une étape effectuant des opérations inverses.

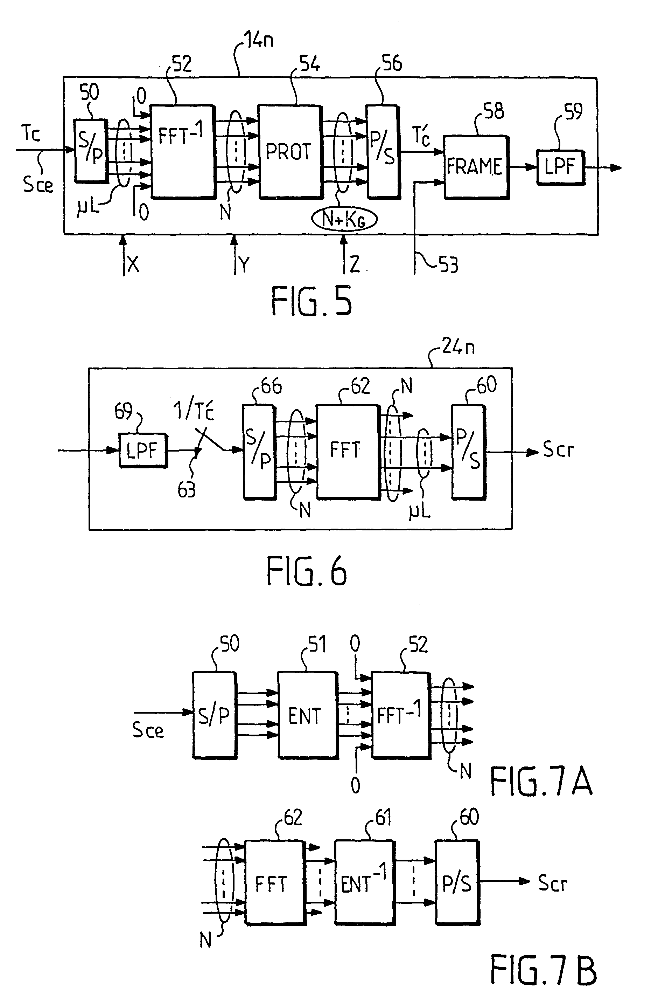

La figure 5 est un exemple de schéma de principe d'un multiplexeur OFDM 14n. Les données numériques représentant les symboles Sce codés à émettre, issues du codeur SSC 12, subissent une transformation série-parallèle dans un bloc 50. Les données parallélisées entrent dans un organe 52 de calcul d'une transformée de Fourier inverse FFT$^{-1}$ d'ordre N qui délivre N sorties en parallèle.

A un instant donné les N sorties en parallèle forment une partie d'un bloc de données OFDM. Un dispositif 54 ajoute à cette partie de bloc de données, des données correspondant à un intervalle de garde. Ceci consiste à recopier certaines données.

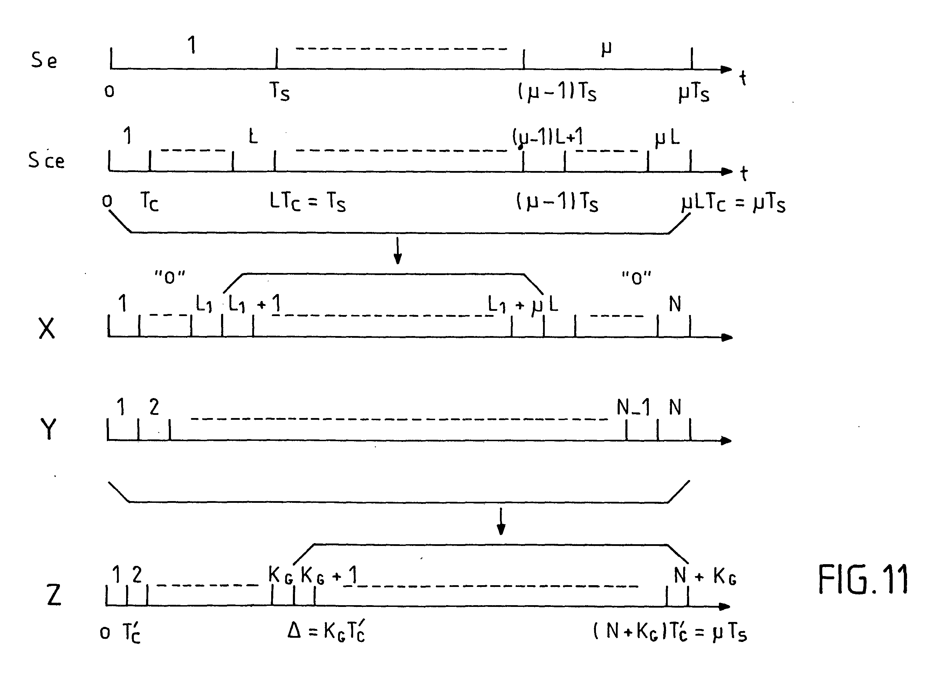

La figure 11 détaille les mécanismes mis en jeu dans la construction d'un bloc de données OFDM. Un symbole Se est en général une valeur complexe. La première ligne représente une suite d'état d'un symbole Se à coder. Un symbole Se a une durée Ts. On considère une suite de plusieurs symboles, par exemple μ symboles, correspondant à une durée μ.Ts.

Après leur passage dans le codeur SSC 12 (figure 2), ces symboles Se donnent naissance aux symboles codés Sce. Un symbole Se donne ainsi naissance à L symboles Sce. Pour une durée μTs, on a donc μL symboles Sce.

Le bloc 50 (figure 5) effectue une transformation série-parallèle et délivre en parallèle les μL symboles qui entrent dans le bloc 52 qui effectue une transformée de Fourier inverse d'ordre N, tel que N = $2^k$ > μL avec k entier. Pour cela, les μL symboles sont complétés par un nombre L1 = (N-μL)/2 de données "0" de part et d'autre en entrée du bloc 52 (repère X). Si N-μL est impair, le début ou la fin du bloc reçoit un symbole de plus. Pour permettre aux N symboles de sortir ultérieurement au cours d'une durée μTs, le bloc 52 fonctionne avec une durée plus courte soit μ.Ts/N (repère Y). Les N symboles qui sortent du bloc 52 sont à leur tour complétés par $K_G$ symboles correspondant à un intervalle de garde Δ = $K_G$.T'c formant protection. Les $K_G$ symboles correspondent à une copie des derniers symboles des N symboles précédents. Ces $K_G$ symboles sont ajoutés devant les N symboles pour constituer un bloc de données de ($K_G$ + N) symboles à émettre (repère Z). Là aussi, le bloc de garde 54 opère avec une durée encore diminuée (T'c = μTs/(N + $K_G$)) pour permettre une sortie série ultérieure des ($K_G$ + N) symboles au cours d'une durée maintenue égale à μTs. Un dispositif 56 de transformation parallèle-série effectue la sérialisation des ($K_G$ + N) symboles. Les blocs successifs de ($K_G$ + N) symboles OFDM sont ensuite organisés en trame OFDM dans un dispositif 58 FRAME. Celui-ci ajoute des symboles spéciaux 53 (synchronisation, wobulation ou autres) qui servent, entre autres, à synchroniser l'émission et la réception ou à estimer le canal. Un filtre passe-bas 59 LPF filtre les signaux avant leur émission par le modulateur à multiporteuses 14m, 14Bm (figure 2).

A la réception les symboles Smr modulés reçus sont démodulés dans le démodulateur 24m (figure 2) puis entrent dans le dispositif OFDM$^{-1}$ 24n qui effectue un traitement inverse de celui effectué à l'émission. Le dispositif 24n comprend en série (figure 6) :

- un filtre passe-bas 69,
- un échantillonneur 63 à la cadence 1/T'c,
- un dispositif 66 de transformation série-parallèle qui délivre N symboles utiles et qui donc ne tient pas compte des $K_G$ symboles reçus pendant l'intervalle de garde,
- un dispositif 62 de calcul d'une transformée de Fourier directe qui délivre une suite de blocs de N symboles.

Les extrémités des blocs de N symboles sont abandonnées pour ne conserver que la partie centrale comprenant $\mu L$ symboles.

- un dispositif 60 de transformation parallèle-série qui opère sur ces $\mu L$ symboles et qui délivre les symboles Scr codés reçus. Ces symboles Scr entrent dans le décodeur SSC$^{-1}$ 22, 22B déjà décrit (figure 3, figure 4-B).

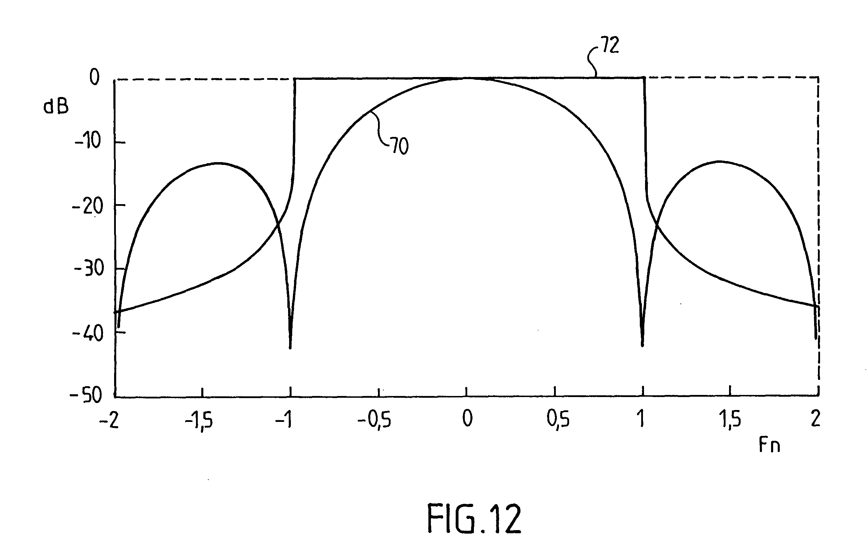

La figure 12 représente la densité spectrale de puissance du signal émis en fonction de la fréquence. La courbe 70 correspond à un système classique à étalement de spectre, et la courbe 72 correspond à un système selon l'invention qui combine les techniques à étalement de spectre avec les techniques par répartition multiplexée de fréquences orthogonales émises sur multiporteuses. L'échelle horizontale correspond à une fréquence $F_n$ en bande de base normalisée par rapport à la bande utile du signal. L'échelle verticale correspond à la densité spectrale exprimée en dB. On observe que pour un système à monoporteuse, le spectre 70 présente une énergie maximale au centre mais que l'énergie décroît très rapidement dans la bande utile. Par contre, pour un système à multiporteuses, le spectre 72 est rectangulaire ce qui montre que l'énergie transmise pour toutes les porteuses reste constante dans la bande utile du signal. On a donc une meilleure utilisation du canal de transmission ce qui rend les transmissions plus fiables et allège la complexité des circuits de réception. On observe que l'énergie hors de la bande utile est beaucoup plus faible pour un système à multiporteuses que pour un système à monoporteuse.

Lorsque le canal peut être l'objet d'interférences multitrajets, il est souhaitable d'effectuer à l'émission des opérations d'entrelacement des symboles et à la réception des opérations de désentrelacement des symboles.

La figure 5 est alors modifiée selon le schéma de la figure 7-A. Entre le dispositif S/P 50 et le dispositif FFT$^{-1}$ 52, on intercale un entrelaceur ENT 51 qui entrelace les symboles selon les techniques connues.

Réciproquement la figure 6 est alors modifiée selon le schéma de la figure 7-B. Entre le dispositif FFT 62 et le dispositif P/S 60, on intercale un désentrelaceur ENT$^{-1}$ 61 qui effectue les opérations inverses de celles effectuées à l'émission.

Les opérations d'entrelacement/désentrelacement ne s'imposent pas par exemple dans le cas de liaisons directes par satellite.

Les schémas des multiplexeurs OFDM représentés sur les figures 5 et/ou 7-A sont utilisés pour réaliser le multiplexeur OFDM 14n d'une station utilisatrice et pour réaliser le multiplexeur OFDM 14Bn d'une station de base.

De même, les schémas des démultiplexeurs représentés sur les figures 6 et/ou 7-B sont utilisés pour réaliser le démultiplexeur 24n d'une station utilisatrice et pour réaliser le démultiplexeur 24Bn d'une station de base.

Les canaux de transmission peuvent être sujets à des évanouissements qui altèrent les signaux reçus. Ces évanouissements peuvent se présenter dans le domaine fréquentiel et/ou temporel. Il est donc souhaitable d'effectuer, à la réception, un contrôle automatique de gain.

La figure 8 représente un schéma partiel de la partie réceptrice d'une station utilisatrice avec contrôle automatique de gain AGC. Il correspond au schéma de la figure 7 dans lequel chacun des $\mu L$ signaux affectés à chaque porteuse issus du désentrelaceur 61 sont munis d'un dispositif AGC $63_1$ - $63_{\mu L}$. Lorsque qu'il n'existe pas de désentrelaceur 61, les dispositifs AGC sont disposés en sortie du bloc FFT 62.

Dans une station utilisatrice, il est également possible d'effectuer un contrôle automatique de gain global en plaçant un dispositif AGC entre le corrélateur 34 et l'organe de décision 36 de la figure 3-B.

La figure 9 représente un schéma partiel de la partie réceptrice d'une station de base avec contrôle automatique de gain AGC. Il correspond au schéma de la figure 4. Dans ce cas, les meilleures performances sont obtenues en plaçant un dispositif AGC $65_1$ - $65_M$ pour chaque utilisateur en sortie de chaque corrélateur $40_1$ - $40_M$ afin de corriger individuellement les imperfections produites par chaque canal.

La combinaison du codage par étalement de spectre avec une modulation à multiporteuses par répartition multiplexée de fréquences orthogonales présente de multiples avantages.

Il n'est plus nécessaire à la réception d'effectuer une synchronisation sur le début de chaque séquence comme la technique SSC le requiert lorsqu'elle est utilisée isolément.

Grâce à l'utilisation d'une modulation à multiporteuses, on dispose d'une plus grande liberté sur le choix des séquences pseudo-aléatoires. En effet, on peut se permettre des écarts quant à l'intercorrélation, à des instants quelconques non nuls, des séquences PN utilisées ce qui n'est pas le cas lorsque la technique SSC est utilisée isolément.

Les signaux OFDM sont organisés en trames. Du fait que chaque station utilisatrice dispose d'une trame qui lui est propre, les mécanismes de synchronisation à la réception sont simplifiés. De plus, l'utilisation d'un intervalle de garde par bloc de données permet d'absorber toutes les incertitudes qui pourraient apparaître aussi bien du fait des retards de propagation variables selon les distances émetteur/récepteur que du fait de retards dus à des trajets multiples. En particulier les retards de propagation sont liés au rayon d'action de la station de base. On constate que l'existence de l'intervalle de garde permet d'accroître ce rayon d'action par rapport aux techniques SSC classiques et ceci sans accroître la complexité du matériel mis en oeuvre. Dans le cas de la technique SSC classique, il faudrait nécessairement disposer d'un égaliseur complexe pour surmonter ces difficultés.

De plus, selon l'invention, l'énergie est répartie plus uniformément sur le canal ce qui rend le système plus robuste aux évanouissements. L'énergie des lobes secondaires est beaucoup plus faible pour un système à multiporteuses que pour un système à monoporteuse.

**Revendications**

1. Système de communication à multiutilisateurs comprenant au moins une station de base (B) émettrice et réceptrice et une pluralité ($U_1$, $U_2$) de stations utilisatrices émettrices et réceptrices communiquant entre elles à travers des canaux de transmission (CHA1, CHA2) au moyen de la station de base, le système comprenant :

   - des moyens (10) pour transformer, à l'émission, des messages à émettre en symboles d'une constellation et des moyens (20) pour effectuer des opérations inverses, à la réception, dans chaque station utilisatrice,
   - des moyens (12, 12B) pour coder, à l'émission, lesdits symboles par un codage par étalement de spectre et des moyens (22, 22B) de décodage pour effectuer des opérations inverses à la réception,
   - des moyens pour émettre (14) et recevoir (24) des données codées sur un canal,

   **caractérisé en ce que** les moyens pour émettre et recevoir (14; 24) respectivement, comprennent des moyens de modulation (14n, 14m ; 14Bn, 14Bm) et des moyens de démodulation (24n, 24m ; 24Bn, 24Bm) à multiporteuses par répartition multiplexée de fréquences orthogonales.

2. Système selon la revendication 1 **caractérisé en ce que** les moyens de modulation (14n, 14m) (14Bn, 14Bm) comprennent :

   - des moyens d'entrée (50) de transformation série-parallèle des symboles codés à émettre,
   - des moyens (52) d'application d'une transformée de Fourier inverse simultanément sur les symboles à émettre par la pluralité de porteuses,
   - des moyens (54) pour ajouter des symboles de protection contre des échos,
   - des moyens (56) de transformation parallèle-série,
   - des moyens (58) pour former des trames de blocs de symboles et ajouter des blocs de symboles spéciaux (53).

3. Système selon la revendication 2 **caractérisé en ce que** les moyens (52) d'application d'une transformée de Fourier inverse sont précédés de moyens (51) d'entrelacement temporel des symboles.

4. Système selon une des revendications 1 à 3, **caractérisé en ce que** les moyens de démodulation (24n, 24m) (24Bn, 24Bm) comprennent en série :

   - un échantillonneur (63),
   - des moyens (66) d'entrée de transformation série- parallèle, des données modulées reçues,
   - des moyens (62) d'application d'une transformée de Fourier directe pour délivrer lesdits symboles codés reçus,
   - des moyens (60) de transformation parallèle-série.

5. Système selon la revendication 4 **caractérisé en ce que** les moyens (62) d'application d'une transformée de Fourier directe sont suivis de moyens (61) de désentrelacement temporel des symboles.

6. Système selon les revendications 4 ou 5 **caractérisé en ce que** les moyens de démodulation (24n, 24Bn) comprennent des moyens de contrôle automatique de gain.

7. Système selon la revendication 6 **caractérisé en ce que** les moyens de contrôle automatique de gain agissent individuellement sur les symboles reçus sur chaque porteuse.

8. Système selon une des revendications 1 à 7, les moyens de décodage de la station de base comprenant des moyens de désétalement de spectre pour chaque utilisateur, **caractérisé en ce que** les moyens de désétalement de spectre sont suivis d'un contrôle automatique de gain individuel.

9. Station utilisatrice mise en oeuvre dans un système selon une des revendications 1 à 8, comportant :

   - des moyens (10) pour transformer, à l'émission, des messages à émettre en symboles d'une constellation,
   - des moyens (12, 12B) pour coder, à l'émission, lesdits symboles par un codage par étalement de spectre,
   - des moyens (14) pour émettre des données sur un canal,

   **caractérisée en ce que** les moyens pour émettre comprennent :

   - des moyens de modulation (14n, 14m ; 14Bn, 14Bm) à multiporteuse par répartition multiplexée de fréquences orthogonales.

10. Station de base mise en oeuvre dans un système selon une des revendications 1 à 8, comportant :

    - des moyens (10) pour transformer, à l'émission, des messages à émettre en symboles d'une constellation,
    - des moyens (12, 12B) pour coder, à l'émission, lesdits symboles par un codage par étalement de spectre,
    - des moyens (14) pour émettre des données sur un canal,

    **caractérisée en ce que** les moyens pour émettre comprennent :

    - des moyens de modulation (14n, 14m ; 14Bn, 14Bm) à multiporteuse par répartition multiplexée de fréquences orthogonales.

11. Station émettrice comportant :

    - des moyens (10) pour transformer, à l'émission, des messages à émettre en symboles d'une constellation,
    - des moyens (12, 12B) pour coder, à l'émission, lesdits symboles par un codage par étalement de spectre,
    - des moyens (14) pour émettre des données sur un canal,

    **caractérisée en ce que** les moyens pour émettre comprennent :

    - des moyens de modulation (14n, 14m ; 14Bn, 14Bm) à multiporteuse par répartition multiplexée de fréquences orthogonales.

12. Station réceptrice comportant :

    - des moyens (24) pour recevoir des données à répartition multiplexée de fréquence sur un canal,
    - des moyens de décodage (22, 22B) pour effectuer l'opération inverse de l'étalement de spectre pour former des données de symbole selon une constellation,
    - des moyens (20) pour transformer à l'émission les symboles d'une constellation en message reçu,

    **caractérisée en ce que** les moyens pour recevoir les données comprennent des moyens de démodulation ((24n, 24m ; 24Bn, 24Bm) à multiporteuses par répartition multiplexée de fréquences orthogonales.

## Patentansprüche

1. Mehrbenutzer-Kommunikationsanordnung mit mindestens einer Sende- und Empfangs-Basisstation (B) und einer Vielzahl ($U_1$, $U_2$) an Sende- und Empfangs-Benutzerstationen, die untereinander über Übertragungskanäle (CHA1, CHA2) und über die Basisstation kommunizieren, wobei die Anordnung enthält:

   - Mittel (10), um beim Senden die zu sendenden Nachrichten in eine Symbolanordnung zu konvertieren, und Mittel (20), um beim Empfangen die umgekehrten Operationen vorzunehmen, in jeder Benutzerstation,
   - Mittel (12, 12B), um beim Senden die besagten Symbole in eine Spreizspektrum-Kodierung zu kodieren, und Mittel (22, 22B) zum Dekodieren, um beim Empfangen die umgekehrten Operationen vorzunehmen,
   - Mittel zum Senden (14) und Empfangen (24) der kodierten Daten über einen Kanal, **dadurch gekennzeichnet, daß** die Mittel zum Senden und Empfangen (14; 24) respektive Mittel zur Modulation (14n, 14m; 14Bn, 14Bm) und Mittel zur Demodulation (24n, 24m; 24Bn, 24Bm) mit Mehrträgersignalen im vielfachen orthogonalen Frequenzmultiplex enthalten.

2. Anordnung nach Anspruch 1, **dadurch gekennzeichnet, daß** die Mittel zur Modulation (14n, 14m) (14Bn, 14Bm) enthalten:

   - Mittel am Eingang (50) zur Serien-Parallel-Konvertierung der zu sendenden kodierten Symbole,

- Mittel (52) zur Anwendung einer simultanen Fourierschen Rücktransformierten auf die über Mehrträgersignale zu sendenden Symbole,
- Mittel (54) zum Hinzufügen der Schutzsymbole gegen Echos,
- Mittel (56) zur Parallel-Serien-Konvertierung,
- Mittel (58) zur Bildung von Symbolblockrastern und zum Hinzufügen von Sondersymbolblökken (53).

3. Anordnung nach Anspruch 2, **dadurch gekennzeichnet, daß** die Mittel (52) zur Anwendung der Fourierschen Rücktransformierten von Mitteln (51) zur zeitlichen Verflechtung der Symbole gefolgt werden.

4. Anordnung nach einem der Ansprüche 1 bis 3, **dadurch gekennzeichnet, daß** die Mittel zur Demodulation (24n, 24m) (24Bn, 24Bm) in Serie enthalten:

- einen Entflechter (63),
- Mittel (66) am Eingang zur Serien-Parallel-Konvertierung der empfangenen kodierten Daten,
- Mittel (62) zur Anwendung einer Fourierschen Direkttransformierten zur Abgabe der besagten empfangenen kodierten Symbole,
- Mittel (60) zur Parallel-Serien-Konvertierung.

5. Anordnung nach Anspruch 4, **dadurch gekennzeichnet, daß** die Mittel (62) zur Anwendung der Fourierschen Direkttransformierten von Mitteln (61) zur zeitlichen Entflechtung der Symbole gefolgt werden.

6. Anordnung nach einem der Ansprüche 4 oder 5, **dadurch gekennzeichnet, daß** die Mittel zur Demodulation (24n, 24Bn) Mittel zur automatischen Leistungskontrolle enthalten.

7. Anordnung nach Anspruch 6, **dadurch gekennzeichnet, daß** die Mittel zur automatischen Leistungskontrolle einzeln auf die erhaltenen Symbole jedes Trägersignals wirken.

8. Anordnung nach einem der Ansprüche 1 bis 7, wobei die Mittel zur Dekodierung der Basisstation Mittel zur Entspreizung des Spektrums für jeden Benutzer enthalten, **dadurch gekennzeichnet, daß** die Mittel zur Entspreizung des Spektrums von einer einzelnen, automatischen Leistungskontrolle gefolgt werden.

9. Benutzerstation, verwendet in einer Anordnung nach einem der Ansprüche 1 bis 8, die enthält:

- Mittel (10) zur Konvertierung beim Senden der zu sendenden Nachrichten in Symbole einer Konstellation,
- Mittel (12, 12b) zur Kodierung beim Senden der besagten Symbole mit Spreizspektrum-Kodierung,
- Mittel (14) zum Senden der Daten über einen Kanal,

**dadurch gekennzeichnet, daß** die Mittel zum Senden enthalten:

- Mittel zur Modulation (14n, 14m; 14Bn, 14Bm) mit Mehrträgersignalen im vielfachen orthogonalen Frequenzmultiplex.

10. Basisstation, verwendet in einer Anordnung nach einem der Ansprüche 1 bis 8, die enthält:

- Mittel (10) zur Konvertierung beim Senden der zu sendenden Nachrichten in Symbole einer Konstellation,
- Mittel (12, 12B) zur Kodierung beim Senden der besagten Symbole mit Spreizspektrum-Kodierung,
- Mittel (14) zum Senden der Daten über einen Kanal,

**dadurch gekennzeichnet, daß** die Mittel zum Senden enthalten:

- Mittel zur Modulation (14n, 14m; 14Bn, 14Bm) mit Mehrträgersignalen im vielfachen orthogonalen Frequenzmultiplex.

11. Sendestation, die enthält:

- Mittel (10) zur Konvertierung beim Senden der zu sendenden Nachrichten in Symbole einer Konstellation,
- Mittel (12, 12B) zur Kodierung beim Senden der besagten Symbole mit Spreizspektrum-Kodierung,
- Mittel (14) zum Senden der Daten über einen Kanal,

**dadurch gekennzeichnet, daß** die Mittel zum Senden enthalten:

- Mittel zur Modulation (14n, 14m; 14Bn, 14Bm) mit Mehrträgersignalen im vielfachen orthogonalen Frequenzmultiplex.

12. Empfangsstation, die enthält:

- Mittel (24) zum Empfangen von Daten im vielfachen Frequenzmultiplex auf einem Kanal,
- Mittel (22, 22B) zur Dekodierung zur Durchführung der umgekehrten Spreizspektrum-Operation zur Bildung der Symboldaten nach einer Konstellation,

- Mittel (20) zur Konvertierung beim Senden der Symbole einer Konstellation in empfangener Nachricht,

**dadurch gekennzeichnet, daß** die Mittel zum Empfangen der Daten Mittel zur Demodulation (24n, 24m; 24Bn, 24Bm) mit Mehrträgersignalen im vielfachen orthogonalen Frequenzmultiplex enthalten.

## Claims

1. A multi-user communication system comprising at least a base transceiver station (B) and a plurality of user transceiver stations ($U_1$, $U_2$) communicating with one another over transmission channels (CHA1, CHA2) *via* the base station, the system comprising:

   - transforming means (10) for transforming transmit messages into symbols of a constellation at the transmitter end and means (20) for performing reverse operations in each user station at the receiver end,
   - coding means (12, 12B) for coding said symbols with a code by spread spectrum coding at the transmitter end and decoding means (22, 22B) for performing reverse operations at the reveiver end,
   - means for transmitting (14) and receiving (24) coded data over a channel,

   **characterized in that** the means for transmitting (14) and receiving (24) comprise multicarrier modulating means (14n 14m)(14Bn, 14Bm) and demodulating means (24n, 4m)(24Bn, 24Bm) by orthogonal frequency-division multiplexing.

2. A system as claimed in Claim 1, **characterized in that** the modulating means (14n, 14m) (14Bn, 14Bm) comprise:

   - input serial to parallel converter means (50) for coded transmit symbols,
   - means (52) for simultaneously applying an inverse Fourier transform to the symbols to be transmitted by the plurality of carriers,
   - means (54) for adding protection symbols against echoes,
   - parallel to serial converter means (56),
   - means (58) for forming frames of symbol blocks and for adding special symbol blocks (53).

3. A system as claimed in Claim 2, **characterized in**

**that** the means (52) for applying an inverse Fourier transform are preceded by time-division/frequency-division symbol interleaving means (51).

4. A system as claimed in one of the Claims 1 to 3, **characterized in that** the demodulating means (24n, 24m)(24Bn, 24Bm) comprise in a series combination:

   - a sampler (63),
   - input serial to parallel converter means (66) for received modulated data,
   - means (62) for applying a direct Fourier transform to produce said received coded symbols,
   - parallel to serial converter means (60).

5. A system as claimed in Claim 4, **characterized in that** the means (62) for applying a direct Fourier transform are followed by time-division/frequency-division symbol de-interleaving means (61).

6. A system as claimed in Claim 4 or 5, **characterized in that** the demodulating means (24n, 24Bn) comprise automatic gain control means.

7. A system as claimed in Claim 6, **characterized in that** the automatic gain control means individually affect the received symbols on each carrier.

8. A system as claimed in one of the Claims 1 to 7, in which the decoding means of the base station comprise means despreading the spectrum for each user, **characterized in that** the means for despreading the spectrum are followed by an separate automatic gain control.

9. A user station used in a system as claimed in one of the Claims 1 to 8, comprising,

   - transforming means (10) for transforming transmit messages into symbols of a constellation
   - coding means (12, 12B) for coding said symbols with a code by spread spectrum coding at the transmitter end,
   - means for transmitting (14) data over a channel,

   **characterized in that** the means for transmitting (14) comprise:

   - multicarrier modulating means (14n 14m) (14Bn, 14Bm) by orthogonal frequency-division multiplexing.

10. A base station used in a system as claimed in one of the Claims 1 to 8, comprising:

- transforming means (10) for transforming transmit messages into symbols of a constellation
- coding means (12, 12B) for coding said symbols with a code by spread spectrum coding at the transmitter end,
- means for transmitting (14) data over a channel,

**characterized in that** the means for transmitting (14) comprise:

- multicarrier modulating means (14n 14m) (14Bn, 14Bm) by orthogonal frequency-division multiplexing.

**11.** A transmitting station comprising:

- transforming means (10) for transforming transmit messages into symbols of a constellation
- coding means (12, 12B) for coding said symbols with a code by spread spectrum coding at the transmitter end,
- means for transmitting (14) data over a channel,

**characterized in that** the means for transmitting (14) comprise:

- multicarrier modulating means (14n 14m) (14Bn, 14Bm) by orthogonal frequency-division multiplexing.

**12.** A receiving station comprising:

- receiving means (24) for receiving frequency-division multiplexed signals over a channel,
- decoding means (22, 22B) for performing the reverse operation of the spectrum spreading to form symbol data according to a constellation,
- means (20) for transforming at the transmitter end the symbols of a constellation into the received message,

**characterized in that** the means for receiving the data comprise multicarrier demodulation means (24n, 24m; 24Bn, 24Bm) by orthogonal frequency-division multiplexing.

FIG.1

EP 0 610 988 B1

FIG.2

EP 0 610 988 B1

FIG. 3 A

FIG. 3B

FIG.4 A

FIG.4B

FIG. 5

FIG. 6

FIG. 7 A

FIG. 7 B

FIG.8

FIG.9

FIG.10

EP 0 610 988 B1

FIG.11

FIG.12

EP 0 610 988 B1